(19)

Europäisches
Patentamt
European
Patent Office
Office européen
des brevets

(11) **EP 4 635 710 A1**

(12) **EUROPEAN PATENT APPLICATION**

(43) Date of publication:
**22.10.2025 Bulletin 2025/43**

(21) Application number: **25170240.3**

(22) Date of filing: **13.04.2025**

(51) International Patent Classification (IPC):
**B29C 45/28** (2006.01)    **B29C 45/82** (2006.01)

(52) Cooperative Patent Classification (CPC):
**B29C 45/281; B29C 45/82;** B29C 2945/76755

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **19.04.2024 IT 202400009037**

(71) Applicant: **Inglass S.p.A.**
**31020 San Polo di Piave (Treviso) (IT)**

(72) Inventors:
• **ROSSI, MASSIMO**
  **31020 San Polo di Piave (TV) (IT)**
• **FUSER, DANIELE**
  **31020 San Polo di Piave (TV) (IT)**
• **DE NADAI, MASSIMO**
  **31020 San Polo di Piave (TV) (IT)**

(74) Representative: **Citron, Massimiliano**
**Via Primo Maggio, 6**
**31020 San Fior (TV) (IT)**

(54)    **SYSTEM FOR REGULATING AN INJECTED FLOW OF MOLTEN MATERIAL**

(57)    A system is described for regulating the flow of molten material injected from a nozzle into a mould. A fluid supply circuit is configured to selectively inject pressurized fluid from a reserve, and comprises N flow regulators; N >= 2, that are placed in parallel to one another, connected to a common outlet to send fluid taken from the second line to the reserve, and provided with respective N inlets isolated from each other and to receive fluid from the second line. There is a fluid-switching device which is inserted between the second line and the inlets of the N regulators, and comprises a single control member provided with only N+K operating configurations which are switchable and mutually exclusive, K >= 1.

Fig. 1

## Description

The invention relates to a system for regulating an injected flow of molten material from a nozzle towards a mold by controlling a valve pin.

In injection molding machines, taken as an example here, molten material is injected into a mold through one or more injection nozzles whose opening and closing is regulated by one or more valve pins controlled by one or more actuators.

For complex or large parts, produced with multi-injection and/or sequential injection methods, positional control of the valve pin, which opens and closes the nozzle, is essential to achieve a high quality finish, in particular to control the flow rate of molten material as well as the pressure of injection into the mold cavity.

Currently, for the molding of high-quality products, the valve pins are controlled by electric actuators (because they allow a wide range of adjustments and controls), which however require complex and expensive control devices (an electronic control unit + related software + sensors + complex wiring + specialized operators).

The use of fluid-operated actuators is therefore more convenient and more familiar to users for certain applications. An example of this is the system of fig. 2 in EP3490777, which however suffers from excessive circuit complication and control difficulties. In particular, the operation of the solenoid valves 21, 22 must be coordinated to direct the flow of fluid passing through the flow regulators.

The main object of the invention is to improve this state of the art.

Another object is to improve systems like the one in EP3490777 by making them simpler and/or making it easier to program their valve pin speed profiles.

Another specific object is to allow, in systems such as the one in EP3490777, the positioning of the valve pin in the closed position in the event of a power failure (greater safety for the operator), or a greater ease of programming for the valve pin dynamics.

One aspect of the invention relates to a regulation system of the flow of molten material injected from a nozzle towards a mold, comprising:

-    a valve pin for the nozzle;
-    an actuator comprising:

   a first chamber connected to a first fluid supply line external to the actuator,
   a second chamber connected to a second fluid supply line external to the actuator,
   a piston that is
   movably mounted to separate said two chambers and to be able to move linearly thanks to the thrust of the fluid inside one of said two chambers, and connected to the valve pin to move it from a closed position, in which there is no flow of molten material through the nozzle, to an open position, in which there is flow of molten material through the nozzle, and vice versa;

-    a fluid supply circuit that
   is configured to selectively inject pressurized fluid from a reserve

   either into the first line, to bring the valve pin to the open position,
   or into the second line to bring the valve pin to the closed position; and comprises:
   N flow regulators; N >= 2, which

      are placed in parallel to each other,
      are connected to a common outlet to allow the passage of fluid toward the reserve (each regulator has one outlet and all the outlets of the regulators are brought to a single common point, called *common outlet*), and
      have respective N inlets isolated from each other to receive fluid from the second line;

      - a fluid-switching device that

      is inserted between the second line and the N inlets of the N regulators, and
      comprises a single control member that can assume only N+K operating configurations which are switchable and mutually exclusive:

         N configurations wherein the control member respectively fluidly connects the second line with only one of the N inlets to allow the passage of fluid from the second line to only one of the N regulators, and
         K configurations, K >= 1, wherein the control member inhibits fluid flow between the second line and the N regulators (i.e. it isolates all N regulators from the second line).

The N+K configurations of the switching device give sufficient degrees of freedom in programming the dynamic profile of the valve pin, while maintaining circuit simplicity (greater than e.g. EP3490777).

In particular, the switching device comprises N outlets and one inlet: the N outlets, here defined for convenience as *control outlets*, are connected respectively to the N inlets of the N regulators, and the inlet of the switching device is connected to the second line.

The control member is preferably configured to connect to the second line and to the inlet of the switching device only one of the N control outlets at a time by switching into N different operating configurations thereof, preferably N different immutable and predefined configurations (e.g. determined by the mechanical construction of the control member and/or the switching device).

To the N different predefined and immutable configurations there correspond N connection patterns between the inlet of the switching device and the N control outlets. Preferably said N connection patterns are all different from each other. More preferably the control outlet connected to the respective regulator in each of the N different configurations is different from the control outlets connected in the other different configurations.

In a preferred embodiment, which further simplifies the system structure, the control member from time to time is configured to connect the second line (and the inlet of the switching device) to only one of the N control outlets according to a predetermined sequence. The sequence may be predetermined internally, e.g. by a predetermined program to achieve cyclical variations for the configurations of the control member, or externally, e.g. to the physical junction of the N control outlets to the inlets of the N controllers respectively. Since the time sequence of the control outlets connected to the second line, determined by the switching of the control member, is preferably predetermined internally in the switching device, the dynamic profile for the valve pin can be programmed by appropriately choosing which inlets of the N controllers are to be respectively connected to the N control outlets.

In a preferred embodiment, the control member is a movable component of the switching device configured to physically connect, by means its own movement, the second line, in particular the inlet of the switching device, with only one of the N control outlets or with only one of K dead points, in particular by means of a translation and/or a rotation. Preferably, the control member is movable in N+K different positions corresponding to:

N connections wherein the second line is connected to only one outlet of the N control outlets, a different outlet for each connection, and

K connections wherein the second line is connected with only one of K dead points, different for each connection.

In a more preferred embodiment, the control member is configured to physically open or create, by means of its own displacement, a fluidic communication channel between the second line, in particular the inlet of the switching device, and only any one of the N control outlets.

One or each of the K dead points may be e.g. a blind duct, a control outlet not connected to a fluid line or a dead-end (blind) channel in the switching device.

In a preferred embodiment, which favors simplicity, K = 1, i.e. only one dead point.

In a preferred embodiment the switching device is a solenoid valve, and the control member is a movable (N+1)-position drawer of the solenoid valve.

In particular, the (N+1)-position drawer comprises:

- a rest position in which the solenoid valve allows fluid to pass from the second line to only a first regulator of the N regulators;
- (N-1) energization positions wherein the solenoid valve allows fluid to pass from the second line (or from the inlet of the switching device) to only one regulator of the N regulators other than the first regulator, and preferably the regulator connected to the second line in one of the (N-1) configurations is different from the one connected in all the other (N-1) configurations;
- an energized position wherein the solenoid valve isolates all N regulators from the second line,

all excitation positions being reachable only starting from the rest position.

In an even more preferred embodiment, the drawer has only three positions (N=2) and comprises:

- one rest position in which the solenoid valve isolates a first and second regulator from the second line,
- a first energized position in which the solenoid valve allows the passage of fluid from the second line to the first regulator,
- a second energized position in which the solenoid valve allows fluid to pass from the second line to the second regulator,

the first energized position and the second energized position being reachable only starting from the rest position.

In a preferred embodiment the (N+1)-position movable drawer in the rest position comprises a one-way valve configured to allow a fluid flow only toward the second line.

In a preferred embodiment, the system comprises an electronic circuit configured to drive the switching device to sequentially bring it into various configurations among the N+K possible ones.

In a preferred embodiment, which facilitates the programming of dynamic profiles, called $P(R_i)$ the flow rate of the i-th regulator, $1 <= i <= N$, we have

$$P(R_1) < P(R_2) < \ldots < P(R_N) \text{ or } P(R_1) > P(R_2) > \ldots > P(R_N).$$

Another aspect of the invention relates to a method of operation for a system for regulating the injection flow of molten material from a nozzle to a mold, the system comprising the features defined above (in one or more variants), with the step of sequentially

fluidly connecting the second line to one of the N inlets, and
fluidly isolating the second line from all N inlets,
by changing the state of a single fluid control member provided in the switching device, in particular by a single switching of the control member (i.e. a configuration change) for each of the above-mentioned actions, more preferably by moving (rotating and/or translating) an internal component of the switching device, in particular the control member.

In a preferred embodiment of the method, the second line is fluidly connected sequentially

either to just one of the N inlets, to send fluid from the second line to that inlet;
or to a dead point, to inhibit fluid flow between the second line and all N regulators,
by changing the state of a single fluid-control member provided in the switching device, in particular by a single switching of the control member for each of the above-mentioned actions, more preferably by moving (rotating and/or translating) an internal component of the switching device, in particular the relevant control member.

In a preferred embodiment, the second line is sequentially connected:

from one of the N control outlets to one of the K dead points by a single switching of the control member, then
from that dead point to the same starting control outlet via a single switching of the control member, and then
from the same starting outlet to a different control outlet by a single switching of the control member.

In a preferred embodiment, the state of the fluid switching device alone is changed to connect the second line from one of the N control outlets to the dead point by removing the electrical power to the switching device (so as to bring the fluid switching device to its rest position).

In a preferred embodiment, the state of the fluid switching device alone is changed (to change the state of the related control member):

- by modifying or modulating a single electrical signal, preferably transmitted over a single electrical control line or control channel (wired or wireless); and/or
- only by electrically powering or isolating the switching device.

In a preferred embodiment, the second line is connected from one of the K dead points to the same starting control outlet by removing the electrical power from the switching device.

The fluid may be, for example, a liquid, such as oil, or compressed air.

The advantages of the invention will be made even clearer by the following description of a preferred system, in which reference is made to the attached drawing in which

- Figure 1 shows a general schematic of the system;
- Figures 2 ÷ 5 show schematic variants of the system.

In the figures, equal members are indicated by equal numbers.

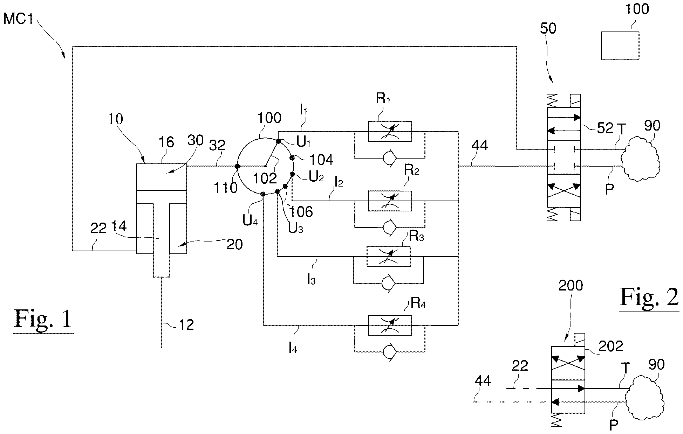

The system MC1 of fig. 1 serves to drive an actuator 10. The actuator 10 is e.g. fixed on a support (not shown), such as e.g. a hot runner (*manifold*) or a plate or a mold, and serves to move (directly, or indirectly through interposed known motion transformation mechanisms - not shown) at least one valve pin 12 for a known injection nozzle (not shown) by means of a piston 14. The piston 14 is linearly movable inside a cavity defined by a casing 16 of the actuator 10. The cavity is divided by the piston 14 into a first chamber 20, communicating with a first external line 22, and a second chamber 30 communicating with a second external line 32.

The actuator 10 may be composed of a single piston 14, as shown in fig. 1, or of one or more pistons superimposed and connected to each other (castle-like), not shown, so as to define multiple first chambers and multiple second chambers communicating respectively with the first line 22 and the second line 32. This variant allows the fluid thrust surface to be increased without having to increase the diameter of the piston and the cylinder.

The chamber 20 is usually isolated from the chamber 30, however situations may arise in which it is necessary to provide means for connecting the two chambers 20, 30 (to re-balance the pressures in the lines 22, 32).

Fluid, e.g. oil or compressed air, can be injected into or extracted from the chamber 20 or 30 on opposite sides of the piston 14 via the lines 22, 32, so that it can be moved linearly in opposite directions, thereby moving the valve pin 12. The movement of the latter causes the nozzle to open or close, with the consequent passage of the molten material into the mold cavity or the obstruction of the molten material. The fluid is taken from a fluid reserve 90. P designates the pressurized flow line from the reserve 90, and T designates a fluid discharge line.

A solenoid valve 50 has a movable drawer 52 which serves to reverse the direction of fluid flow in the lines 22, 32. This flow direction in turn determines the direction of translation of the piston 14 and therefore that of the valve pin 12, in opening or closing motion. At rest the solenoid valve 50 remains in a first position in which it blocks the passage of fluid within the lines 22, 32, therefore the piston 14 remains still. The solenoid valve 50 can then be electrically switched to two other different energized positions in which it allows the passage of fluid from the reserve 90 towards the actuator 10, that is:

- into a second position, wherein fluid arriving from the reserve 90 can travel along the line 22 to the chamber 20 and fluid can exit from the chamber 30 to the line 32 (valve pin 12 moving towards the opening position), and
- in a third position, wherein fluid arriving from the reserve 90 can travel along the line 32 towards the chamber 30 and fluid can exit from the chamber 20 towards the line 22 (valve pin 12 moving towards the closing position).

Two or more flow regulators $R_1$, $R_2$,...$R_N$ , N >= 2 are inserted between the line 32 and the outlet of the solenoid valve 50 (in the illustrated example for simplicity N = 4).

The flow regulators $R_1 \div R_N$ are set in parallel with each other, have their respective outlets connected to a common outlet 44 (e.g. a line portion) connected to the solenoid valve 50 and comprise respective inlets $I_1 \div I_N$ isolated from each other. From the inlets $I_1 \div I_N$ the regulators $R_1 \div R_N$ can carry fluid from the line 32 to the outlet 44, and from there to the solenoid valve 50. When the fluid flows in the opposite direction on line 32 the regulators $R_1 \div R_N$ do not intervene since the fluid passes through one-way valves placed in parallel with the regulators $R_1 \div R_N$, bringing the piston 14 to closing.

A flow switch 100 is installed between the line 32 and the inlets $I_1 \div I_N$, having an inlet 110, N control outlets $U_1 \div U_N$ and a single control switchable member 102. The outlets $U_1 \div U_N$ are connected to the inlets $I_1 \div I_N$ respectively, and the inlet 110 is connected to the line 32.

The switchable member 102 has

N fluid-transfer configurations, in which respectively it fluidly connects the inlet 110 (and the line 32) to only one of the outlets $U_1 \div U_N$, i.e. it enables the passage of fluid from the line 32 to only one of the inlets $I_1 \div I_N$, and
at least one isolation configuration in which it fluidly isolates the inlet 110 (and the line 32) from all outlets $U_1 \div U_N$, i.e. it prevents fluid from flowing from the line 32 to all inlets $I_1 \div I_N$.

For this purpose e.g. in the isolation configuration the member 102 is configured to fluidly connect the line 32 to a dead point 104 of the switch 100 or to an additional control outlet U which is disconnected from the fluid circuit of the lines 22, 32.

The isolation configuration of the member 102 serves to isolate the regulators $R_1 \div R_N$ from the line 32 and stop the travel of the piston 14.

In general, the device 100 may comprise one or more dead points, e.g. distributed among the outlets $U_1 \div U_N$, to program different speed profiles with intermediate pauses. For example, in fig. 1 the additional dead point 106 may replace the dead point 104 or be provided in the controller 100 at the same time.

OPERATION

When at rest, the switch 100 preferably remains in a configuration in which it allows the passage of fluid on the line 32 from the solenoid valve 50 and from the line 44. The fluid bypasses the regulators $R_1 \div R_N$ through the non-return valves.

At the beginning of the injection cycle, the switchable member 102 can remain where it is and can fluidly connect the second line 32 to the regulator $R_i$ previously connected at rest. Or, as also during the injection cycle, the switchable member 102 is switched through one or more of its different fluid-transfer configurations, in each of which it allows a passage of fluid on the line 32 (and coming from the chamber 30) only through one of the regulators $R_1 \div R_N$.

When one of the regulators $R_1 \div R_N$ is connected to carry fluid, it has a braking function similar to that, along a downhill path, offered by an internal combustion engine when the engaged gear varies. By limiting the exit speed of the fluid from the chamber 30, the entry speed of the fluid into the chamber 22 is limited, and therefore the speed of the piston 14.

The selection of the regulators $R_1 \div R_N$ then allows, besides a homogeneous movement, the setting of different movement speeds of the piston 14 along its stroke since each $R_1 \div R_N$ regulator imposes a lower or higher fluid flow rate than the next regulator $R_1 \div R_N$ in the sequence.

For example, let $P(R_i)$ be the flow rate of the i-th regulator, $1 <= i <= N$, we have

$$P(R_1) < P(R_2) < \ldots < P(R_N) \text{ or } P(R_1) > P(R_2) > \ldots > P(R_N).$$

This relationship facilitates the programming of speed profiles for the valve pin 12 that have strictly increasing or decreasing speed ramps.

The cooperation of the switch 100 with the solenoid valve 50 also ensures the absence or at least the reduction of dead times in the actuation of the valve pin 12.

Note that, for simplicity, preferably the switch 100 is configured to connect the line 32 to a regulator $R_1 \div R_N$ or to dead point 104 only

- by sequentially moving the switchable member 102 from one outlet $U_i$ to the next $U_{i+1}$ or $U_{i-1}$ , or
- by sequentially moving the switchable member 102 from the outlet $U_1$ to the dead point 104, or
- by sequentially moving the member 102 from the dead point 104 to the outlet $U_1$.

In one variant, via the switch 100, the line 32 can be connected in sequence to either outlets $U_1 \div U_N$ that have a strictly consecutive index (increasing or decreasing), or the dead point 104 after the outlet $U_1$, or the outlet $U_1$ after the dead point 104.

In another variant (see other dead point 106 in dashed lines in fig. 1), there can be connected to the line 32 in sequence

either only the outlets of a first subset of outlets $U_1 \div U_N$ that have a strictly consecutive index (increasing or decreasing),
or only the outlets of a second subset of outlets $U_1 \div U_N$ that have a strictly consecutive index (increasing or decreasing), where the outlets of the first subset are different from those of the second subset and overall contain all outlets $U_1 \div U_N$,
or the dead point 106 after the outlet belonging to the first subset and having a greater or lesser flow rate among those, or vice versa, or
the outlet, belonging to the second subset and having a greater or lesser flow rate among those, to the dead point 106, or vice versa.

The above features are only apparently limiting. Actually, they are an advantage in many applications, where it is necessary to program a speed profile for the valve pin 12 that has speed ramps with strictly increasing or decreasing speed, and that, after the valve pin 12 stops, the latter restarts always with a certain speed, equal to or different from the previous one. The system MC1 inherently guarantees these conditions, without further or dedicated algorithmic controls or circuit sophistications.

In particular, the switchable member 102 may be a movable or displaceable member of the switch 100.

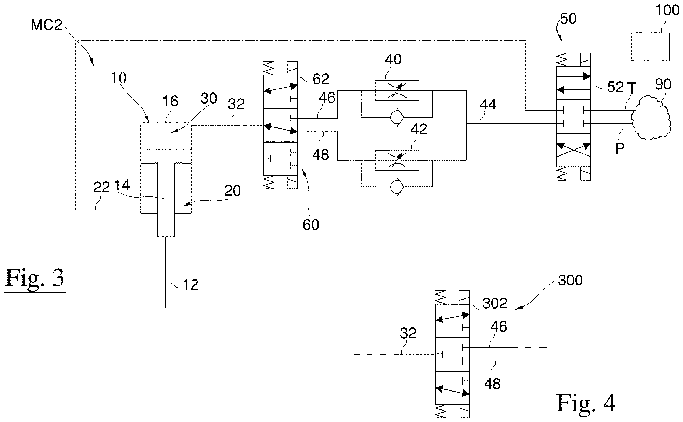

A preferred embodiment of the system MC1 is the system MC2 of fig. 3.

Between the line 32 and the outlet of the solenoid valve 50, preferably only two flow regulators 40, 42 with respective inlets 46, 48 are inserted. The regulators 40, 42 correspond, for example, to the regulators $R_1$, $R_2$ in fig. 1, and the following relationship applies:

flow rate of regulator 42 < flow rate of regulator 40.

The switch 100 is made with a solenoid valve 60 having a movable drawer 62 which serves to fluidly switch the line 32 (i.e. divert the fluid) to only one of the inlets 46, 48 at a time or to isolate the regulators 40, 42 from the line 32.

At rest, the solenoid valve 60 remains in a first position in which it allows the passage of fluid on the line 32 towards the regulator 42 (and a first speed for the piston 14). From the first position, the solenoid valve 60 can then be electrically switched to two other different energized positions, both of which can only be reached starting from the first position:

- a second position, in which it allows the passage of fluid on the line 32 towards the regulator 40 (second speed for piston 14), or
- a third position, in which it isolates the regulators 40, 42 from the line 32 (piston 14 stationary).

During operation, the movement of the valve pin 12 may be dynamically adjusted by controlling the position of the drawers 52, 62.

Below are some tables describing possible dynamic profiles obtainable with the sequential switching of the solenoid valves 50, 60.

In the tables, the content of the cells corresponds to the position of the drawer shown in the drawings (C = the one shown in the Center, B = the one shown at the Bottom, T = the one shown at the Top), while the time sequence should be read from left to right. Note that each cycle begins and ends with the values [C,C], namely with the rest positions as illustrated in fig. 3.

|  | Time intervals | | | | | |
|---|---|---|---|---|---|---|
| Solenoid valve 50 | C | B | B | B | T | C |
| Solenoid valve 60 | C | C | B | T | C | C |

|  | Time intervals | | | | | |
|---|---|---|---|---|---|---|
| Solenoid valve 50 | C | B | B | B | T | C |
| Solenoid valve 60 | C | C | T | B | T | C |

|  | Time intervals | | | | |
|---|---|---|---|---|---|
| Solenoid valve 50 | C | B | B | T | C |
| Solenoid valve 60 | C | C | B | T | C |

|  | Time intervals | | | | | | |
|---|---|---|---|---|---|---|---|
| Solenoid valve 50 | C | B | B | B | B | B | T | C |
| Solenoid valve 60 | C | C | B | T | T | B | T | C |

|  | Time intervals | | | | | | |
|---|---|---|---|---|---|---|---|
| Solenoid valve 50 | C | B | B | B | T | T | T | C |
| Solenoid valve 60 | C | C | T | B | T | B | T | C |

From the tables it can be seen that in the system MC2, to pass from the condition of the valve pin 12 stopped to the condition of the valve pin 12 moving at the highest speed, it is necessary to move the valve pin 12 at the lowest speed, even if only for a short interval. This ensures a smoother and jerk-free translational movement of the valve pin 12 (less mechanical shocks).

In a different variant of the system MC2 (fig. 4), the solenoid valve 60 is replaced by a solenoid valve 300 equipped with a drawer 302 comprising a rest position in which the regulators 40, 42 are fluidically isolated from the line 32. The solenoid valve 300 can then be electrically switched to two other different energized positions, both of which can only be reached starting from the rest position:

- a second position, in which fluid transit from the line 32 is permitted only towards the regulator 42, or
- a third position, in which the passage of fluid from the line 32 is permitted only towards the regulator 40.

In this case, it can be noted that to pass from the condition of the valve pin 12 moving at the slowest speed to that of the fastest speed, the valve pin 12 must necessarily be stopped, even if only for a short interval. This ensures a smoother and jerk-free translational movement of the valve pin 12 (and fewer mechanical shocks).

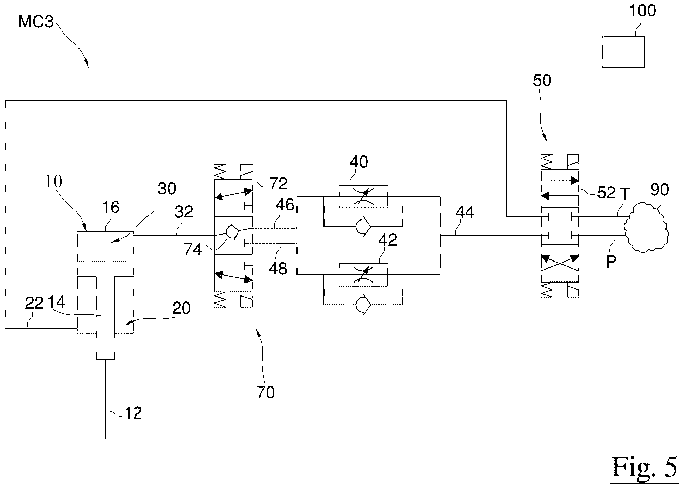

Another preferred embodiment of the system MC1 is the system MC3 of fig. 5.

The switch 100 is made with a solenoid valve 70 having a movable drawer 72 which serves to switch the fluid arriving from the line 32 to only one of the inlets 46, 48 at a time or to isolate the regulators 40, 42 from the line 32.

At rest, the solenoid valve 70 remains in a first position in which the line 32 communicates fluidly with the inlet 46. In this first position, a one-way valve 74 comprised in the drawer 72 is interposed between the line 32 and the inlet 46.

The solenoid valve 70 can then be electrically switched to two other different energized positions, both of which can only be reached starting from the first position:

- a second position, in which the passage of fluid is permitted from the line 32 to only the regulator 40, or
- a third position, in which the passage of fluid is permitted from the line 32 to only the regulator 42.

With the solenoid valve 300 of fig. 4, if it is not energized, the valve pin 12 could remain blocked because the backward flow of the fluid in the line 32 (towards the reserve 90) is not permitted (if the solenoid valve 50 is not in the fluid-blocking configuration). In the system MC3, however, this problem is solved, because the one-way valve 74 ensures that the valve pin 12 is always allowed to close in the event of a power failure. The one-way valve 74 is arranged to prevent fluid flow towards a regulator but to allow fluid flow towards the line 32.

Another variant of fig. 5 envisages that the solenoid valve 50 is of the monostable type (see fig. 2), which in the absence of power allows the valve pin 12 to close.

The permitted flow directions are conventionally indicated by arrows inside the drawer 52, 62.

During operation, the movement of the valve pin 12 can be dynamically adjusted by controlling the position of the drawers 52, 62.

In a different embodiment, see fig. 2, the solenoid valve 50 of each scheme described here is replaced by a monostable solenoid valve 200, i.e. its drawer 202 has only two positions:

a rest position (or in the absence of electrical power) in which the pressurized fluid is conveyed to the line 32 to close the valve pin 12, and
an energized position in which the pressurized flow is conveyed to the line 22 to open the valve pin 12.

In general, the following additional variants apply to the variants described above.

The solenoid valve 50 and/or 60 and/or 70 is, for example, of the commercial type, with excitation coils and return springs.

The solenoid valve 50 and/or 60 and/or 70 may be replaced by an equivalent flow diverting device.

Preferably the system MC1 and/or MC2 and/or MC3 comprises an electronic control unit 100 to control at least the position or configuration of the switchable member 102 and/or the drawer of the solenoid valves 50, 60, 70; and/or a pump for moving the fluid from the reserve 90. It is also possible to implement automatic control of the $R_1 \div R_N$ regulators.

The references $U_1 \div U_N$ in fig. 1 do not necessarily indicate the spatial arrangement of the control outlets; what matters most is the switching logic and how the ports of the device 100 are sequentially connected.

With the systems described, one can obtain the dynamic profiles for the valve pin illustrated in the patent applications:

PCT/IB2019/053936, IT102017000037002, IT102016000080198,
IT102016000055364, IT102015000008368, ITTO2014A001030,
ITTO2014A001021, ITTO2014A000701, WO2012/074879A1,
WO2012/087491A1, WO2018/020177A1.


## Claims

1. System for regulating the flow of molten material injected from a nozzle into a mould, comprising:

- a valve pin for the nozzle;
- an actuator comprising:

a first chamber connected to a first fluid supply line external to the actuator,
a second chamber connected to a second fluid supply line external to the actuator,
a piston that is
movably mounted to separate two said chambers and to be able to move linearly thanks to the thrust of the fluid inside one of said two chambers, and connected to the valve pin to move it from a closing position, in which there is no flow of molten material through the nozzle, to an opening position, in which there is flow of molten material through the nozzle, and vice versa;

- a fluid supply circuit which

is configured to selectively inject pressurized fluid from a reserve,
either into the first line, to bring the valve pin towards the opening position,
or into the second line to bring the valve pin towards the closing position; and comprises:
N flow regulators; N >= 2, that are

placed in parallel to one another,
provided with respective N inlets isolated from each other to receive fluid from the second line; and
connected to a common outlet to send fluid taken from the second line to the reserve;

- a fluid-switching device which
is inserted between the second line and the inlets of the N regulators, and comprises a single control member provided with only N+K operating configurations which are switchable and mutually exclusive:

N configurations in which the control member respectively fluidly connects the second line with only one of the N inlets to allow the passage of fluid from the second line towards only one of the N regulators, and
K configurations, K >= 1, in which the control member inhibits the flow of fluid between the second line and all the N regulators.

2. System (MC1) according to claim 1, wherein the switching device comprises N control outlets and one inlet,

the N control outlets being connected respectively to the N inlets of the regulators,
said inlet being connected to the second line, and
the control member being configured to fluidly connect to said inlet only one of its N control outlets at a time by switching into N different operating configurations,
wherein the control outlet connected to a respective regulator in each of the different N different configurations is different from the control outlets connected in the other different configurations.

3. System (MC1) according to claim 2, wherein the N+K different configurations are immutable and predefined.

4. System (MC1) according to any previous claim, wherein the control member is configured to connect each time the second line with only one of the N control outlets according to a sequence determined by the physical connection of the N inlets to the N control outlets.

5. System (MC1) according to any previous claim, wherein the control member is a movable component of the switching device and is configured to physically connect, through a displacement thereof, the second line with only any one of the N control outlets or with only one of K dead ends.

6. System (MC1) according to claim 5, wherein K=1 and the switching device is a solenoid valve with a movable drawer having (N+1) positions.

7. System (MC1) according to claim 6, wherein the (N+1) position drawer comprises:

- a rest position in which the solenoid valve allows the passage of fluid from the second line towards only one first regulator of the N regulators;
- N-1 excitation positions in which the solenoid valve allows, respectively, the passage of fluid from the second line towards only one regulator of the N regulators different from the first regulator, each of the N-1 positions corresponding to a different single regulator connected to the second line;
- a second excitation position in which the solenoid valve isolates all N regulators from the second line,

all excitation positions being reachable only starting from the rest position.

8. System (MC1) according to claim 7, wherein N=2 and the movable drawer has only three positions and comprises:

a rest position in which the solenoid valve isolates a first and a second regulator from the second line,
a first excitation position in which the solenoid valve allows the passage of fluid from the second line towards the first regulator,
a second excitation position in which the solenoid valve allows the passage of fluid from the second line towards the second regulator,
the first excitation position and the second excitation position being reachable only starting from the rest position.

9. System (MC1) according to claim 6 or 7 or 8, wherein the (N+1) position movable drawer in the rest position comprises a one-way valve configured to allow fluid flow only towards the second line.

10. System (MC1) according to any previous claim, wherein $P(R_i)$ is the flow rate of the i-th regulator, $1 <= i <= N$, and

$$P(R_1) < P(R_2) < \ldots < P(R_N) \text{ or } P(R_1) > P(R_2) > \ldots > P(R_N).$$

Fig. 1

Fig. 2

Fig. 3

Fig. 4

Fig. 5

Europäisches
Patentamt

European
Patent Office

Office européen
des brevets

# EUROPEAN SEARCH REPORT

**Application Number**

EP 25 17 0240

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | EP 3 490 777 B1 (RUNIPSYS EUROPE [FR]) 22 April 2020 (2020-04-22) * paragraphs [0001], [0002], [0024] - [0091]; figure 2 * | 1-10 | INV. B29C45/28 B29C45/82 |
| | ----- | | |
| Y | US 2023/294344 A1 (DE NADAI MASSIMO [IT] ET AL) 21 September 2023 (2023-09-21) * paragraphs [0002], [0006], [0036] - [0068]; figures 1,2 * | 1-10 | |
| | ----- | | |
| Y | Asco: "ASCO SOLENOID AND PRESSURE-OPERATED VALVE TECHNOLOGY ISO 1219 symbols", , 30 December 2018 (2018-12-30), page 1, XP093213859, Retrieved from the Internet: URL:https://www.emerson.com/documents/auto mation/european-catalog-solenoid-valve-iso -1219-symbols-asco-en-6867428.pdf [retrieved on 2024-10-10] * page 1 - page 2 * | 1-10 | |
| | ----- | | **TECHNICAL FIELDS SEARCHED (IPC)** |
| | | | B29C |

The present search report has been drawn up for all claims

| Place of search | Date of completion of the search | Examiner |
|---|---|---|
| Munich | 6 August 2025 | Raicher, Gerald |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 4 635 710 A1**

## ANNEX TO THE EUROPEAN SEARCH REPORT
## ON EUROPEAN PATENT APPLICATION NO.

EP 25 17 0240

This annex lists the patent family members relating to the patent documents cited in the above-mentioned European search report.
The members are as contained in the European Patent Office EDP file on
The European Patent Office is in no way liable for these particulars which are merely given for the purpose of information.

06-08-2025

| Patent document cited in search report | | Publication date | Patent family member(s) | | Publication date |
|---|---|---|---|---|---|
| EP 3490777 | B1 | 22-04-2020 | CA | 3031908 A1 | 01-02-2018 |
| | | | CN | 109689335 A | 26-04-2019 |
| | | | EP | 3490777 A1 | 05-06-2019 |
| | | | ES | 2798428 T3 | 11-12-2020 |
| | | | FR | 3054473 A1 | 02-02-2018 |
| | | | KR | 20190034303 A | 01-04-2019 |
| | | | PT | 3490777 T | 14-07-2020 |
| | | | US | 2020180201 A1 | 11-06-2020 |
| | | | WO | 2018020177 A1 | 01-02-2018 |
| US 2023294344 | A1 | 21-09-2023 | CN | 116157247 A | 23-05-2023 |
| | | | EP | 4192666 A1 | 14-06-2023 |
| | | | KR | 20230048321 A | 11-04-2023 |
| | | | US | 2023294344 A1 | 21-09-2023 |
| | | | WO | 2022029589 A1 | 10-02-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3490777 A
- WO 2019053936 W
- IT 102017000037002
- IT 102016000080198
- IT 102016000055364
- IT 102015000008368
- IT 2014A001030
- IT 2014A001021
- IT 2014A000701
- WO 2012074879 A1
- WO 2012087491 A1
- WO 2018020177 A1